# EUROPEAN PATENT APPLICATION

(11) **EP 3 988 994 A1**
(43) Date of publication of application: **27.04.2022**
(21) Application number: 20840404.6
(22) Date of filing: 22.06.2020
(51) Int. Cl.: G02F 1/133, H04M 1/02

(54) **DISPLAY SCREEN ASSEMBLY AND ELECTRONIC APPARATUS**

(30) Priority: 18.07.2019 CN 201910650813
(71) Applicant: GUANGDONG OPPO MOBILE TELECOMMUNICATIONS CORP., LTD., Wusha, Chang'an Dongguan Guangdong 523860 (CN)
(72) Inventor: JIA, Yuhu, Dongguan, Guangdong 523860 (CN)
(74) Representative: Taor, Simon Edward William
(86) International application number: PCT/CN2020/097320
(87) International publication number: WO 2021/008304

(57) **Abstract**

Provided is a display screen assembly (10). The display screen assembly (10) includes a liquid crystal display screen (11), a backlight unit (12), a camera unit (13), and a reflective unit (14). The liquid crystal display screen (11) has a first display region (111) and a second display region (112) connected to the first display region (111). The backlight unit (12) is arranged correspondingly to the first display region (111). The camera unit (13) is arranged correspondingly to the second display region (112). The reflective unit (14) is arranged correspondingly to the second display region (112). The reflective unit (14) is located in front of a field of view of the camera unit (13), and the reflective unit (14) is configured to reflect ambient light, which is radiated on the reflective unit (14) from an outside of the display screen assembly (10), to the second display region (112) for display of images in the second display region (112).

## Description

### CROSS-REFERENCE TO RELATED APPLICATIONS

The present application claims priority to and the benefit of Chinese Patent Application No. 201910650813.8, filed with China National Intellectual Property Administration on July 18, 2019, the entire disclosure of which is incorporated herein by reference.

### FIELD

The present disclosure relates to a field of electronic devices, and in particular, to a display screen assembly and an electronic apparatus.

### BACKGROUND

With the rapid development of economy and technology, mobile phones have become indispensable electronic devices for people. In order to meet needs of users and improve user experience, a screen-to-body ratio of mobile phones is getting higher and higher. In order to achieve a high screen-to-body ratio, a camera of a mobile phone can be arranged under a screen. However, the camera arranged under the screen tends to interfere with a backlight unit of an electronic apparatus, and thus the camera cannot obtain external images.

### SUMMARY

The present disclosure provides a display screen assembly and an electronic apparatus.

A display screen assembly according to an embodiment of the present disclosure includes: a liquid crystal display screen having a first display region and a second display region connected to the first display region; a backlight unit arranged correspondingly to the first display region; a camera unit correspondingly to the second display region; and a reflective unit correspondingly to the second display region. The reflective unit is located in front of a field of view of the camera unit, and the reflective unit is configured to reflect ambient light, which is radiated on the reflective unit from an outside of the display screen assembly, to the second display region for displaying images in the second display region.

A display screen assembly includes: a liquid crystal display screen having a first display region and a second display region connected to the first display region, the second display region being configured to cover a camera unit; a backlight unit arranged correspondingly to the first display region; and a reflective unit arranged correspondingly to the second display region. The reflective unit is configured to reflect ambient light, which is radiated on the reflective unit from an outside of the display screen assembly, to the second display region for displaying images in the second display region.

An electronic apparatus according to an embodiment of the present disclosure includes a housing, and the display screen assembly according to any of the above embodiments. The display screen assembly is arranged on the housing.

Additional aspects and advantages of the present disclosure will be given in part in the following description, or become apparent in part from the following description, or can be learned from practicing of the present disclosure.

### BRIEF DESCRIPTION OF DRAWINGS

The above and/or additional aspects and advantages of the present disclosure will become apparent and understandable from the following description of embodiments in conjunction with the accompanying drawings, in which:
FIG. 1 is a schematic plan view of an electronic apparatus according to an embodiment of the present disclosure;
FIG. 2 is another schematic plan view of an electronic apparatus according to an embodiment of the present disclosure;
FIG. 3 is a schematic cross-sectional view taken along a direction X-X in FIG. 1;
FIG. 4 is a schematic plan view of a filter layer of an electronic apparatus according to an embodiment of the present disclosure;
FIG. 5 is another schematic plan view of a filter layer of an electronic apparatus according to an embodiment of the present disclosure;
FIG. 6 is a schematic cross-sectional view of a second display region according to an embodiment of the present disclosure;
FIG. 7 is another schematic cross-sectional view of a second display region according to an embodiment of the present disclosure; and
FIG. 8 is yet another schematic cross-sectional view of a second display region according to an embodiment of the present disclosure.

### Description of main feature symbols:

Electronic apparatus 100, housing 101, display screen assembly 10, liquid crystal display screen 11, first display region 111, second display region 112, first region 1121, transparent electrode 11211, second region 1122, liquid crystal layer 113, first liquid crystal portion 1131, second liquid crystal portion 1132, filter layer 114, first filter portion 1141, second filter portion 1142, transmission region 1143, filter region 1144, through hole 11441, backlight unit 12, camera unit 13, reflective unit 14, substrate 141, protrusion 142, upper cover 15, lower cover 16, optical axis 17.

### DESCRIPTION OF EMBODIMENTS

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

Different embodiments or examples are provided below for implementing different structures of the present disclosure. In order to simplify the disclosure of the present disclosure, components and arrangements of specific examples are described below. Of course, they are examples only, and are not intended to limit the present disclosure. Furthermore, reference numerals and/or reference letters can be repeated in different examples of the present disclosure for a purpose of simplification and clearness, rather than indicating relationships between various embodiments and/or arrangements discussed herein. In addition, the present disclosure provides examples of various specific processes and materials, but the applicability of other processes and/or application of other materials may be appreciated by those skilled in the art.

In the related art, in an electronic apparatus with a liquid crystal display module, to realize an under-screen camera solution, it is generally necessary to provide an opening corresponding to a camera on a backlight unit. However, this complicates a structure of the backlight unit and increases manufacturing difficulty. In addition, the liquid crystal display screen cannot display images at the position corresponding to the opening, which affects a visual effect of the liquid crystal display module.

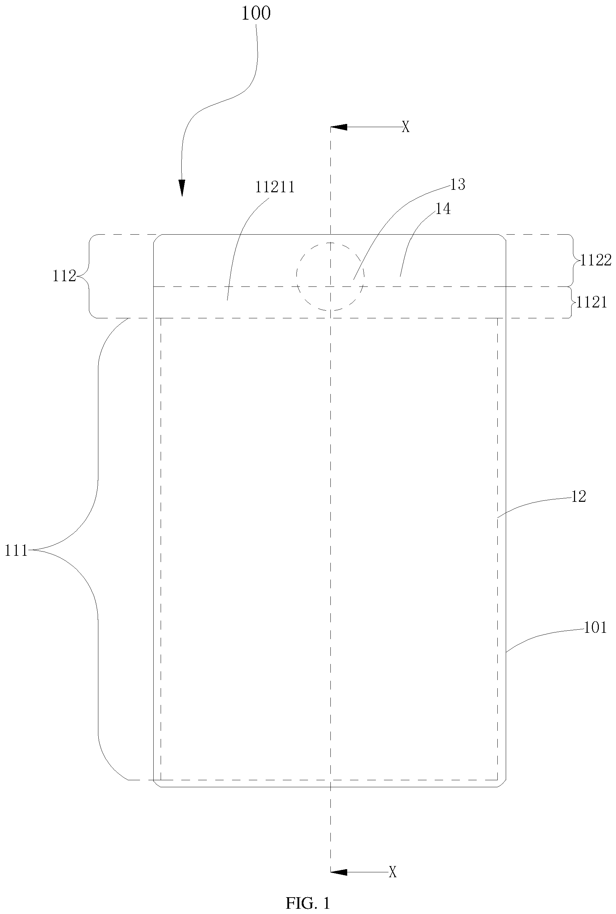

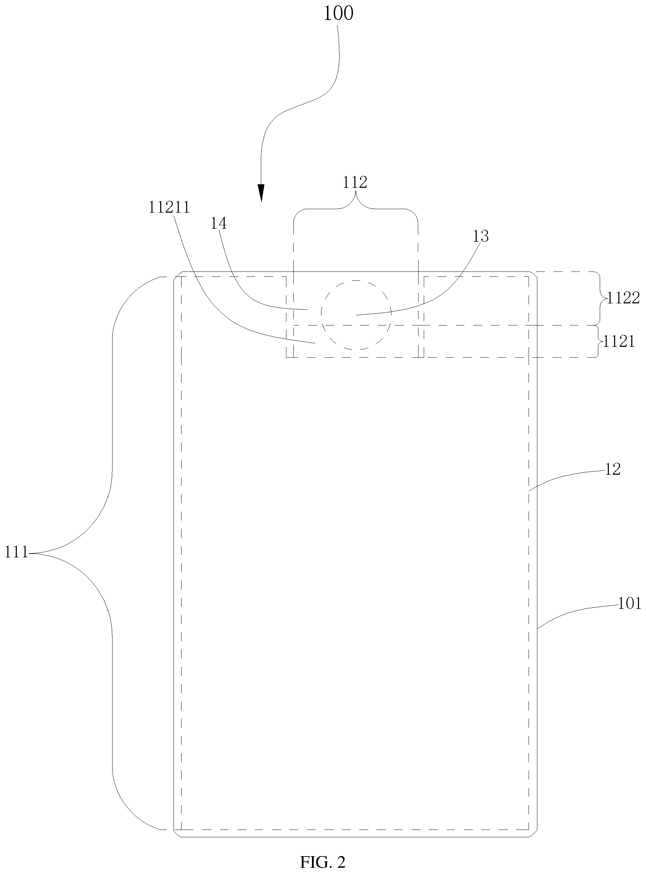

Referring to FIGS. 1 and 2, an electronic apparatus 100 according to an embodiment of the present disclosure includes a housing 101 and a display screen assembly 10. The display screen assembly 10 is arranged on the housing 101.

Exemplarily, the electronic apparatus 100 may be any of various types of computer system devices that are mobile or portable and perform wireless communication (FIG. 1 only illustrates one form exemplarily).

Specifically, the electronic apparatus 100 may be a smart device, such as a mobile phone or a smart phone (for example, a phone based on an iPhone system, and a phone based on an Android system), a portable game device (for example, an iPhone), etc.

Further, the housing 101 can be made of plastic. Plastic has a low cost, is easily available, and has strong plasticity. Using plastic to fabricate the housing 101 facilitates mass production of the housing 101, which in turn facilitates mass production of the electronic apparatus 100, and reduces fabrication cost of the electronic apparatus 100. It can be understood that the housing 101 can not only be made of plastic, and a specific material of the housing 101 can be chosen according to different situations. For example, in other embodiments, the housing 101 may be made of a metal material such as stainless steel or an alloy. The specific material of the housing 101 is not limited here.

Specifically, the housing 101 may be rectangular. Of course, the housing 101 is not limited to a rectangular shape, and a specific shape of the housing 101 can be designed according to different situations. The specific shape of the housing 101 is not limited here.

Referring to FIG. 1 to FIG. 3, an embodiment of the present disclosure discloses a display screen assembly 10. The display screen assembly 10 according to the embodiment of the present disclosure includes a liquid crystal display screen 11, a backlight unit 12, a camera unit 13, and a reflective unit 14. The liquid crystal display screen 11 has a first display region 111 and a second display region 112 connected to the first display region 111. The backlight unit 12 is arranged correspondingly to the first display region 111. The camera unit 13 is arranged correspondingly to the second display region 112, and the camera unit 13 and the backlight unit 12 are arranged side by side. The reflective unit 14 is arranged correspondingly to the second display region 112. The reflective unit 14 is located in front of a field of view of the camera unit 13, and the reflective unit 14 is configured to reflect ambient light, which is radiated on the reflective unit 14 from an outside of the display screen assembly 10, to the second display region 112 for display of images in the second display region 112.

In the display screen assembly 10 according to the embodiment of the present disclosure, the reflective unit 14 is configured to directly reflect light outside the display screen assembly 10 to the second display region 112, such that the second display region 112 can display images, and there is no need to provide the backlight unit 12 to provide light for the second display region 112, which not only ensures that the camera unit 13 normally collects light, but also enables the second display region 112 corresponding to the camera unit to display images normally. Therefore, the visual experience is improved. Further, a structure of the display screen assembly 10 is relatively simple, which is beneficial to the production of the display screen assembly 10. Also, since the camera unit 13 and the backlight unit 12 are arranged side by side, a thickness of the display screen assembly 10 can be reduced.

Further, the display screen assembly 10 further includes an upper cover 15. The upper cover 15 is located on a side of the liquid crystal display screen 11 facing away from the backlight unit 12, and plays a role in protecting the liquid crystal display screen 11. For example, without the protection of the upper cover 15, water droplets or dust from the outside may fall on the liquid crystal display screen 11, which causes damages to the liquid crystal display screen 11. The upper cover 15 can protect the display screen assembly 10 from water or dust invasion, thereby increasing a service life of the display screen assembly 10, and further increasing a service life of the electronic apparatus 100.

Specifically, the upper cover 15 may be made of glass. The glass, which has a good light transmittance, can improve working efficiency of the display screen assembly 10. It can be understood that the upper cover 15 is not limited to being made of glass, and a specific material of the upper cover 15 can be chosen according to different situations. The specific material of the upper cover 15 is not limited here.

In the description of the present disclosure, terms such as "first" and "second" are used herein for purposes of description and are not intended to indicate or imply relative importance, or to implicitly show a number of technical features indicated. Thus, a feature defined with "first" or "second" may explicitly or implicitly includes one or more such features. In the description of the present disclosure, "a plurality of' means two or more, unless specified otherwise.

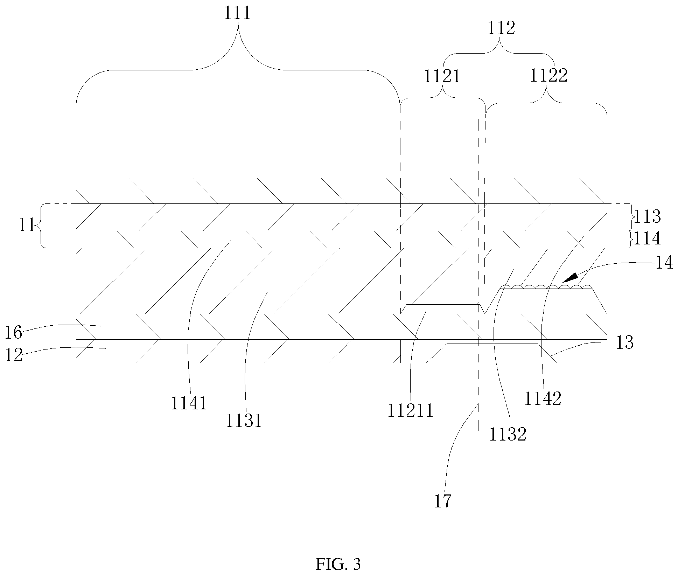

Referring to FIG. 3, in some embodiments, the liquid crystal display screen 11 includes a liquid crystal layer 113 and a filter layer 114 stacked on the liquid crystal layer 113, the liquid crystal layer 113 includes a first liquid crystal portion 1131 located in the first display region 111 and a second liquid crystal portion 1132 located in the second display region 112, and the reflective unit 14 is embedded in the second liquid crystal portion 1132.

The filter layer 114 can filter unnecessary light, such that light passing through the filter layer 114 is more uniform, and a quality of images displayed by the display screen assembly 10 is higher.

Further, the filter layer 114 may be a three primary color filter layer 114, which enables the display screen assembly 10 to display color images. Of course, the filter layer 114 is not limited to being the three primary color filter layer 114, and a type of the filter layer 114 can be set according to different situations. A specific type of the filter layer 114 is not limited here.

Furthermore, the backlight unit 12 includes a light guide sheet and a backlight source. The backlight source is configured to generate light to be guided into the first liquid crystal portion 1131 through the light guide sheet. Light from the first liquid crystal portion 1131 passes through a first filter portion 1141 and is projected onto the first display region 111, such that the first display region 111 can display images.

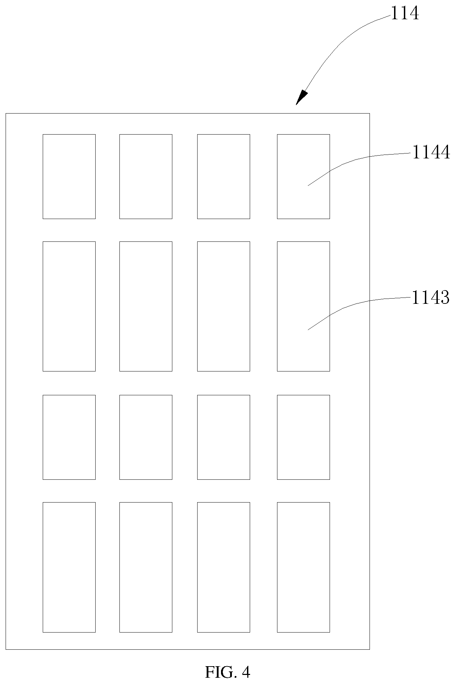

FIG. 4 illustrates a plan view of an example of the filter layer 114. Referring to FIG. 4, the filter layer 114 has a transmission region 1143 and a filter region 1144, and both the transmission region 1143 and the filter region 1144 are rectangular in shape. The filter region 1144 can filter light, and the transmission region 1143 can allows direct transmission of light, thereby increasing the light transmittance of the filter layer 114.

It can be understood that shapes of the transmission region 1143 and the filter region 1144 are not limited to being rectangular, and specific shapes of the transmission region 1143 and the filter region 1144 can be set according to different situations. In other embodiments, areas of the transmission region 1143 and the filter region 1144 can also be adjusted according to different situations. Specific shapes and areas of the transmission region 1143 and the filter region 1144 are not limited here.

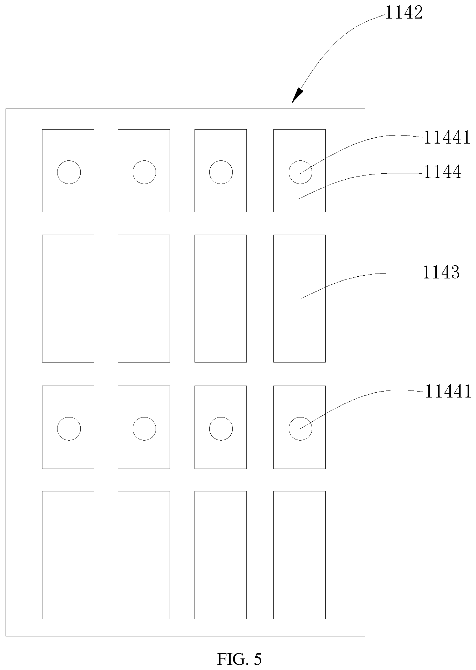

Referring to FIG. 5, in an example, a through hole 11441 may be further provided in the filter region 1144 for improving the light transmittance of the filter layer 114. It can be understood that, in this embodiment, the through hole 11441 may be circular. In other embodiments, the through hole 11441 may be triangular, rectangular, or the like. A specific shape of the through hole 11441 is not limited here.

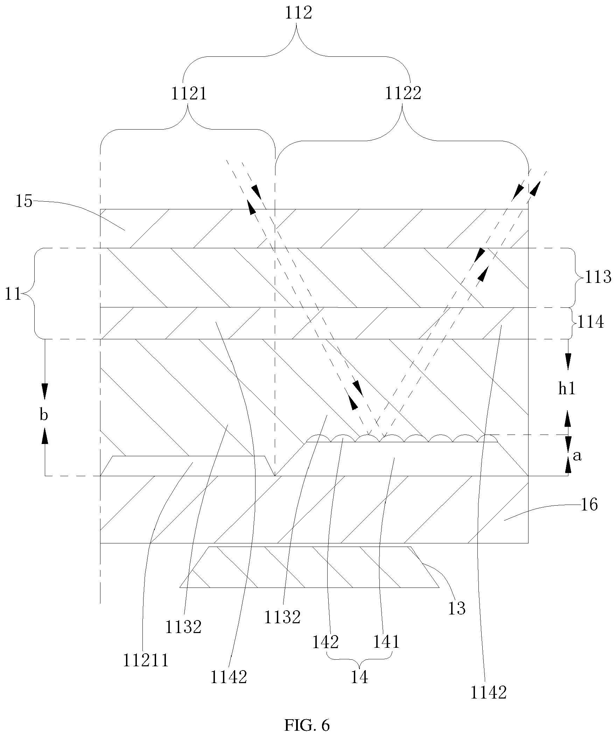

Referring to FIGS. 6 to 8, in some embodiments, the filter layer 114 includes a first filter portion 1141 located in the first display region 111 and a second filter portion 1142 located in the second display region 112. The second filter portion 1142 covers the reflective unit 14, and a light transmittance of the second filter portion 1142 is higher than a light transmittance of the first filter portion 1141.

Since the light transmittance of the second filter portion 1142 is higher than the light transmittance of the first filter portion 1141, light from the display screen assembly 10 can fully pass through the second filter portion 1142, i.e., more light passes through the second filter portion 1142, such that the camera unit 13 can receive more light.

Further, the filter layer 114 includes a plurality of pixel units. The light transmittance of the second filter portion 1142 being higher than the light transmittance of the first filter portion 1141 may mean that a number density of pixel units in the second filter portion 1142 is smaller than a number density of pixel units in the first filter portion 1141. It can be understood that the light transmittance decreases as the number density of pixel units increase. In this way, it is realized that the light transmittance of the second filter portion 1142 is higher than the light transmittance of the first filter portion 1141.

Referring to FIG. 6, in some embodiments, a ratio of a thickness a of the reflective unit 14 to a thickness b of the second liquid crystal portion 1132 ranges from 0.45 to 0.55.

A distance between an upper surface of the reflective unit 14 and a lower surface of the second filter portion 1142 increases as the ratio of the thickness a of the reflective unit 14 to the thickness b of the second liquid crystal portion 1132 increases. The distance between the upper surface of the reflective unit 14 and the lower surface of the second filter portion 1142 decreases as the ratio of the thickness a of the reflective unit 14 to the thickness b of the second liquid crystal portion 1132 decreases.

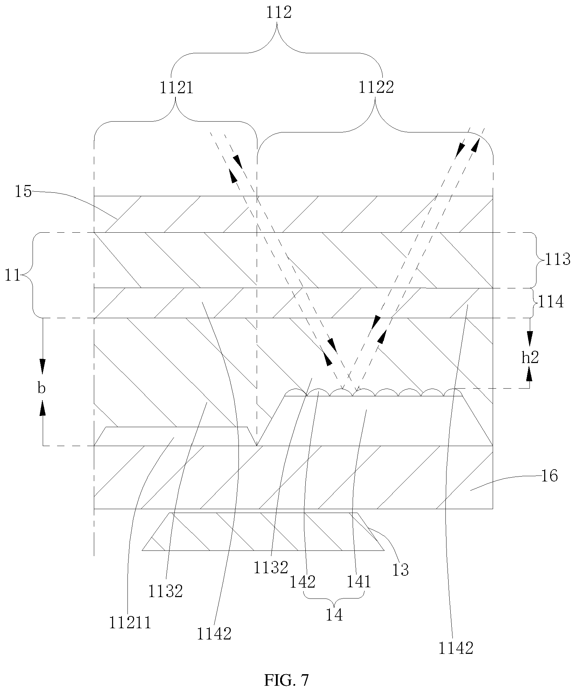

In a process of light reflection, a length of an optical path of incident light may affect a position of an optical path of reflected light, as illustrated in FIGS. 6 to 8. In the illustrated examples, a difference between FIGS. 6 to 8 lies in different distances between the upper surface of the reflective unit 14 and the lower surface of the second filter portion 1142. A distance h1 between the upper surface of the reflective unit 14 and the lower surface of the second filter portion 1142 in FIG. 6 is greater than a distance h2 between the upper surface of the reflective unit 14 and the lower surface of the second filter portion 1142 in FIG. 7.

That is, in the example illustrated in FIG. 6, the distance between the upper surface of the reflective unit 14 and the lower surface of the second filter portion 1142 is relatively far, while in the example illustrated in FIG. 7, the distance between the upper surface of the reflective unit 14 and the lower surface of the second filter portion 1142 is relatively short. When the incident light is incident from a same position and at a same angle in FIG. 6 and FIG. 7, it can be seen that a length of an optical path of the incident light in FIG. 6 is longer, and a length of an optical path of the incident light in FIG. 7 is shorter. Therefore, in FIGS. 6 and 7, lengths of optical paths of emitted light are different and positions of the emitted light projected on the lower surface of the second filter portion 1142 are also different.

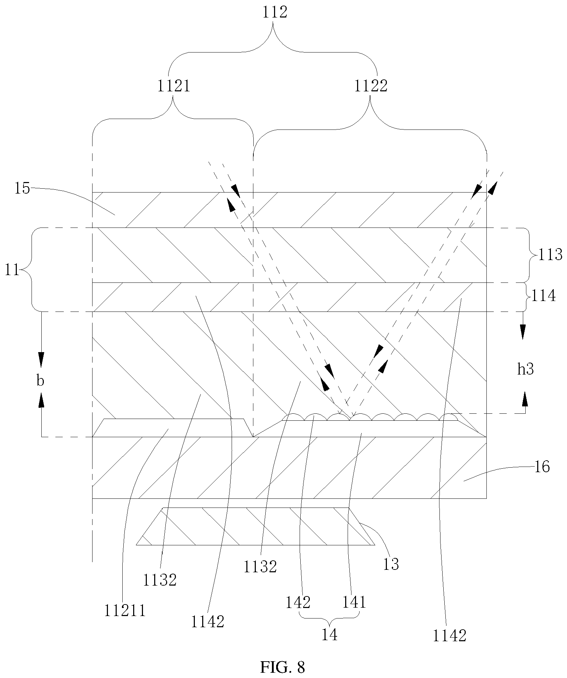

In FIG. 8, a distance h3 between the upper surface of the reflective unit 14 and the lower surface of the second filter portion 1142 is greater than the distance h1 between the upper surface of the reflective unit 14 and the lower surface of the second filter portion 1142 in FIG. 7, and thus the reflected light is not projected onto the second liquid crystal portion 1132. It can be seen from the above description that when the distance between the upper surface of the reflective unit 14 and the lower surface of the second filter portion 1142 is too large, the reflected light may not be projected onto the second liquid crystal portion 1132, that is, the reflected light may exit from a side edge of the display screen assembly 10, which is not conducive to display of the display screen assembly 10.

When the ratio of the thickness a of the reflective unit 14 to the thickness b of the second liquid crystal portion 1132 ranges from 0.45 to 0.55, the reflected light can be fully projected onto the second filter portion 1142, which improves a utilization rate of light of the display screen assembly 10.

In this embodiment, the ratio of the thickness a of the reflective unit 14 to the thickness b of the second liquid crystal portion 1132 is 0.5. It can be understood that the ratio of the thickness a of the reflective unit 14 to the thickness b of the second liquid crystal portion 1132 may not be limited to being in the range of 0.45 to 0.55. A range of the ratio of the thickness a of the reflective unit 14 to the thickness b of the second liquid crystal portion 1132 can be set according to different situations. For example, in other embodiments, the ratio of the thickness a of the reflective unit 14 to the thickness b of the second liquid crystal portion 1132 may range from 0.48 to 0.57. Specific numerical values of the range of the ratio of the thickness a of the reflective unit 14 to the thickness b of the second liquid crystal portion 1132 are not limited here.

Further, referring to FIG. 6, it can be seen from the example in the figure that external ambient light may pass through the upper cover 15, the liquid crystal display screen 11, and the second liquid crystal portion 1132 sequentially, and is then radiated on the reflective unit 14. Light radiated on the reflective unit 14 may be reflected, such that the light passes through the second liquid crystal portion 1132 and the liquid crystal display screen 11 sequentially and is then radiated on the upper cover 15. In this way, the display screen assembly 10 can display images.

Referring to FIGS. 6 to 8, in some embodiments, the second display region 112 includes a first region 1121 and a second region 1122 connected to the first region 1121. The reflective unit 14 is arranged correspondingly to the second region 1122, a transparent electrode 11211 is embedded in a part of the second liquid crystal portion 1132 located in the first region 1121 such that a light transmittance of the first region 1121 is greater than a light transmittance of the second region 1122, and an optical axis 17 of the camera unit 13 passes through the first region 1121.

The arrangement of the transparent electrode 11211 can enhance the light transmittance of the first region 1121, such that light in the first region 1121 is more sufficient.

Specifically, the optical axis 17 refers to a center line of a light beam received by the camera unit 13. That is, the light from the camera unit 13 can pass through the first region 1121.

Further, the transparent electrode 11211 may be made of an Indium Tin Oxide (ITO) material. The ITO material, which has a high visible light transmittance, can increase an amount of light passing through the transparent electrode 11211, thereby improving an imaging quality as more light enters the first region 1121. It can be understood that the transparent electrode 11211 is not limited to being made of the ITO material. A specific material of the transparent electrode 11211 can be selected according to different situations. The specific material of the transparent electrode 11211 is not limited here.

In some embodiments, a light transmittance of a part of the filter layer 114 corresponding to the first region 1121 is higher than a light transmittance of a part of the filter layer 114 corresponding to the second region 1122.

With this arrangement, the light transmittance of the part of the filter layer 114 corresponding to the first region 1121 is higher, such that light can sufficiently pass through the part of the filter layer 114 corresponding to the first region 1121.

In some embodiments, the reflective unit 14 is made of a semi-transmissive and semi-reflective film material. The reflective unit 14 made of the semi-transmissive and semi-reflective film material has certain reflection and transmission properties. With this arrangement, when light is radiated to the reflective unit 14, a part of the light can pass through the reflective unit 14 to enter the camera assembly 13 such that the camera unit 13 can collect external light; and another part of the light can be refracted on the reflective unit to the second liquid crystal portion 1132 and then projected to the second display region 112 such that the second display region 112 can display images.

Of course, the reflective unit 14 is not limited to the semi-transmissive and semi-reflective film material, and a specific material of the reflective unit 14 can be selected according to different situations. For example, in other embodiments, the reflective unit 14 can be made of a total reflecting film material. The specific material of the reflective unit 14 is not limited here.

Referring to FIGS. 6 to 8, in some embodiments, the reflective unit 14 includes a substrate 141 and a plurality of reflective protrusions 142 arranged on the substrate 141. The plurality of reflective protrusions 142 is arranged in an array.

The arrangement of the substrate 141 can increase a thickness of the reflective unit 14, which makes the upper surface of the reflective unit 14 closer to the second filter portion 1142, thereby improving light reflection efficiency of the reflective unit 14. The arrangement of the plurality of reflective protrusions 142 can make the reflective unit 14 more three-dimensional and improve the light reflection efficiency of the reflective unit 14.

Further, the reflective unit 14 can be formed by dry etching. For example, one piece of substrate is selected and the dry etching is performed on the substrate to form the plurality of protrusions 142. The dry etching has advantages of easy control and low cost, which is beneficial to fabrication of the reflective unit 14. It can be understood that the reflective unit 14 is not limited to being formed by the dry etching. Other fabrication processes can be adopted to fabricate the reflective unit 14, depending on different situations. For example, in other embodiments, the reflective unit 14 can also be fabricated by wet etching. A specific fabrication process of the reflective unit 14 is not limited here.

Referring to FIGS. 6 to 8, in some embodiments, each protrusion 142 has a surface as an arc surface.

It can be understood that the surface of the reflective protrusion 142 is not limited to the arc surface, and a specific shape of the surface of the protrusion 142 may be set according to different situations. The specific shape of the surface of the protrusion 142 is not limited here.

Further, the display screen assembly 10 further includes a lower cover 16 located between the camera unit 13 and the reflective unit 14, and both the reflective unit 14 and the backlight unit 12 are arranged on the lower cover 16.

The lower cover 16 can be made of glass. The glass, which has a good light transmission property, can improve working efficiency of the display screen assembly 10. It can be understood that the lower cover 16 is not limited to being made of glass. A specific material of the lower cover 16 can be chosen according to different situations. The specific material of the lower cover 16 is not limited here.

Further, referring to FIGS. 1 and 2, sizes of the backlight unit 12 in FIG. 1 and FIG. 2 are different. The size of the backlight unit 12 in FIG. 2 is larger, while the size of the backlight unit 12 in FIG. 1 is smaller.

In FIG. 2, the backlight unit 12 can cover an upper left corner and an upper right corner of the liquid crystal display screen 11. In this way, light can be provided to regions of the upper left corner and the upper right corner of the liquid crystal display screen 11 through the backlight unit 12, such that display regions in the regions of the upper left corner and the upper right corner of the liquid crystal display screen 11 can display contents.

In FIG. 1, the upper left corner and the upper right corner of the liquid crystal display screen 11 are not covered by the backlight unit 12, and thus a size of the reflective unit 14 can be enlarged. In this way, light can be provided to regions of the upper left corner and the upper right corner of the liquid crystal display screen 11 through the reflective unit 14, such that display regions in the regions of the upper left corner and the upper right corner of the liquid crystal display screen 11 can display contents.

According to another embodiment of the present disclosure, the display screen assembly 10 includes the liquid crystal display screen 11, the backlight unit 12, and the reflective unit 14, the liquid crystal display screen 11 has the first display region 111 and the second display region 112 connected to the first display region 111, and the second display region 112 is used to cover the camera unit 13. The backlight unit 12 is arranged correspondingly to the first display region 111. The reflective unit 14 is arranged correspondingly to the second display region 112. The reflective unit 14 is located in front of the field of view of the camera unit 13, and the reflective unit 14 is configured to reflect the ambient light, which is radiated on the reflective unit 14 from the outside of the display screen assembly 10, to the second display region 112, such that the second display region 112 displays images.

Throughout this description, description with reference to "an embodiment", "some embodiments", "illustrative embodiments", "an example", "a specific example", or "some examples" means that a particular feature, structure, material, or characteristic described in connection with the embodiment or example is included in at least one embodiment or example of the present disclosure. In this disclosure, the illustrative presentations of the above phrases are not necessarily referring to the same embodiment or example. Furthermore, the particular features, structures, materials, or characteristics described here may be combined in any suitable manner in any one or more embodiments or examples.

Although embodiments of present disclosure have been shown and described above, it should be understood by those skilled in the art that changes, modifications, substitutions and variations can be made to the embodiments without departing from the principle and essence of the present disclosure. The scope of the present disclosure is limited by the claims and equivalents thereof.

## Claims

1. A display screen assembly, comprising:
a liquid crystal display screen having a first display region and a second display region connected to the first display region;
a backlight unit arranged correspondingly to the first display region;
a camera unit arranged correspondingly to the second display region; and
a reflective unit arranged correspondingly to the second display region, wherein the reflective unit is located in front of a field of view of the camera unit, and the reflective unit is configured to reflect ambient light, which is radiated on the reflective unit from an outside of the display screen assembly, to the second display region for displaying images in the second display region.

2. The display screen assembly according to claim 1, wherein the liquid crystal display screen comprises a liquid crystal layer and a filter layer stacked on the liquid crystal layer, the liquid crystal layer comprises a first liquid crystal portion located in the first display region and a second liquid crystal portion located in the second display region, and the reflective unit is embedded in the second liquid crystal portion.

3. The display screen assembly according to claim 2, wherein the filter layer comprises a first filter portion located in the first display region and a second filter portion located in the second display region, the second filter portion is configured to cover the reflective unit, and a light transmittance of the second filter portion is higher than a light transmittance of the first filter portion.

4. The display screen assembly according to claim 2, wherein a ratio of a thickness of the reflective unit to a thickness of the second liquid crystal portion ranges from 0.45 to 0.55.

5. The display screen assembly according to claim 2, wherein the second display region comprises a first region and a second region connected to the first region, the reflective assembly is arranged correspondingly to the second region, a transparent electrode is embedded in a part of the second liquid crystal portion located in the first region, a light transmittance of the first region is greater than a light transmittance of the second region, and an optical axis of the camera unit passes through the first region.

6. The display screen assembly according to claim 5, wherein a light transmittance of a part of the filter layer corresponding to the first region is higher than a light transmittance of a part of the filter layer corresponding to the second region.

7. The display screen assembly according to claim 5, wherein the transparent electrode is made of an indium tin oxide material.

8. The display screen assembly according to claim 2, wherein the filter layer has a transmission region and a filter region, the filter region is configured to filter light, and the transmission region is configured for direct transmission of light.

9. The display screen assembly according to claim 8, wherein both the transmission region and the filter region are rectangular.

10. The display screen assembly according to claim 2, wherein the filter layer is a three primary color filter layer.

11. The display screen assembly according to claim 2, wherein the backlight unit comprises a light guide sheet and a backlight source, and the backlight source is configured to generate light to be guided into the first liquid crystal portion through the light guide sheet.

12. The display screen assembly according to claim 1, wherein the reflective unit is made of a semi-transmissive and semi-reflective film material.

13. The display screen assembly according to claim 1, wherein the reflective unit comprises a substrate and a plurality of reflective protrusions arranged on the substrate, the plurality of reflective protrusions being arranged in an array.

14. The display screen assembly according to claim 13, wherein each of the plurality of reflective protrusions has a surface as an arc surface.

15. The display screen assembly according to claim 1, further comprising a lower cover located between the camera unit and the reflective unit, wherein both the reflective unit and the backlight unit are arranged on the lower cover.

16. The display screen assembly according to claim 15, wherein the lower cover is made of glass.

17. The display screen assembly according to claim 1, further comprising an upper cover located on a side of the liquid crystal display screen facing away from the backlight unit.

18. The display screen assembly according to claim 17, wherein the upper cover is made of glass.

19. A display screen assembly, comprising:
a liquid crystal display screen having a first display region and a second display region connected to the first display region, wherein the second display region is configured to cover a camera unit;
a backlight unit arranged correspondingly to the first display region; and
a reflective unit arranged correspondingly to the second display region, wherein the reflective assembly is configured to reflect ambient light, which is radiated on the reflective assembly from an outside of the display screen assembly, to the second display region for display of images in the second display region.

20. An electronic apparatus, comprising:
a housing; and
the display screen assembly according to any one of claims 1 to 19, wherein the display screen assembly is arranged on the housing.
